# FASCICULE DE BREVET EUROPEEN

(11) **EP 3 083 769 B1**
(45) Date de publication et mention de la délivrance du brevet: **08.02.2023**
(21) Numéro de dépôt: 14812460.5
(22) Date de dépôt: 12.12.2014
(51) Int. Cl.: C08J 3/22, C08L 7/00, B60C 11/00, B60C 1/00

(54) **COMPOSITION DE CAOUTCHOUC A BASE MAJORITAIREMENT DE CAOUTCHOUC NATUREL**
VORWIEGEND AUS NATURKAUTSCHUK HERGESTELLTE KAUTSCHUKZUSAMMENSETZUNG
RUBBER COMPOSITION MADE PREDOMINANTLY OF NATURAL RUBBER

(30) Priorité: 20.12.2013 FR 1363149
(43) Date de publication de la demande: 26.10.2016
(73) Titulaire: Compagnie Générale des Etablissements Michelin, 63000 Clermont-Ferrand (FR)
(72) Inventeur: VALLAT, Perrine, F-63040 Clermont-Ferrand Cedex 9 (FR); ALDON, Isabelle, F-63040 Clermont-Ferrand Cedex 9 (FR)
(74) Mandataire: Bocchi, Brigitte
(86) Numéro de dépôt international: PCT/EP2014/077585
(87) Numéro de publication internationale: WO 2015/091271

(56) Documents cités:
- EP-A1- 2 730 433
- EP-A1- 2 730 609
- EP-A1- 3 012 118
- WO-A1-02/094931
- WO-A1-2010/077232

## Description

L'invention concerne un pneumatique dont la bande de roulement comporte une composition de caoutchouc à base majoritairement de caoutchouc naturel, de charge renforçante comprenant au moins du noir de carbone et une charge inorganique, en particulier la silice.

Depuis que les économies de carburant et la nécessité de protéger l'environnement sont devenues une priorité, il s'est avéré nécessaire de produire des pneumatiques ayant une résistance au roulement réduite sans pénalisation de leur résistance à l'usure.

Ceci a été rendu notamment possible grâce à l'emploi, dans les bandes de roulement de ces pneumatiques, de nouvelles compositions de caoutchouc renforcées au moins partiellement de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi qu'une adhérence améliorée sur sol mouillé, enneigé ou verglacé.

Ainsi il est intéressant notamment dans une composition majoritairement à base de caoutchouc naturel, d'utiliser un coupage de charges renforçantes (noir de carbone et charge inorganique telle que de la silice). Cependant on cherche toujours à améliorer les propriétés d'usure et de résistance à la fatigue. Il peut alors être intéressant de remplacer une partie minoritaire du caoutchouc naturel par un élastomère synthétique. Cependant l'homme du métier sait que cette modification se fait au détriment des propriétés limites à la rupture de la composition.

La demanderesse a découvert de façon surprenante qu'en remplaçant une partie du caoutchouc naturel par du polyisoprène de synthèse, on arrivait à obtenir un compromis de propriétés particulièrement intéressant contrairement à ce qui est obtenu avec d'autres élastomères synthétiques alors que rien ne laisse présager à l'homme du métier que le polyisoprène de synthèse peut permettre d'obtenir un tel effet en combinaison avec du caoutchouc naturel et un mélange de charges renforçantes.

L'invention a ainsi pour objet un pneumatique dont la bande de roulement comporte une composition de caoutchouc à base d'au moins un coupage de caoutchouc naturel et de polyisoprène de synthèse, le taux de caoutchouc naturel allant de 60 à 90 pce, parties pour cent parties d'élastomère, et le taux de polyisoprène de synthèse allant de 10 à 40 pce, d'une charge renforçante comprenant au moins du noir de carbone et une charge inorganique, le taux de noir de carbone étant la charge renforçante majoritaire en pourcentage massique.

Préférentiellement le taux de caoutchouc naturel de la composition est supérieur ou égal à 70 pce et le taux de polyisoprène de synthèse inférieur ou égal à 30 pce, et encore plus préférentiellement le taux de caoutchouc naturel est supérieur ou égal à 80 pce et le taux de polyisoprène de synthèse inférieur ou égal à 20 pce.

Avantageusement la charge inorganique de la composition est une silice ou un noir de carbone recouvert de silice, et de préférence la charge inorganique est une silice de précipitation.

L'invention concerne également un procédé pour obtenir une composition de caoutchouc à base d'au moins un coupage de caoutchouc naturel et de polyisoprène de synthèse, le taux de caoutchouc naturel allant de 60 à 90 pce, parties pour cent parties d'élastomère, et le taux de polyisoprène de synthèse allant de 10 à 40 pce, d'une charge renforçante comprenant au moins du noir de carbone et une charge inorganique, le taux de noir de carbone étant la charge renforçante majoritaire en pourcentage massique qui comprend les étapes suivantes :
- préparer un premier mélange maître comprenant au moins le caoutchouc naturel et le noir de carbone,
- incorporer le polyisoprène de synthèse et les autres constituantes de la composition, à l'exception du système de réticulation, au premier mélange maître dans un mélangeur en malaxant thermomécaniquement le tout jusqu'à atteindre une température maximale comprise entre 130°C et 200°C,
- refroidir l'ensemble à une température inférieure à 100°C,
- incorporer ensuite : le système de réticulation;
- malaxer le tout jusqu'à une température maximale inférieure à 120°C.

### I. - MESURES ET TESTS

Les compositions de caoutchouc sont caractérisées, avant et après cuisson, comme indiqué ci-après.

### Fluidité

Cette mesure est adaptée de la mesure de fluidité communément utilisée dans l'industrie des plastiques pour la caractérisation l'extrudabilité notamment des matériaux thermoplastiques. La mesure est décrite dans la norme ASTM D1238 (ou NF T 51-016), et modifiée comme suit.

Dans un rhéomètre capillaire, on fait chauffer l'échantillon du mélange élastomérique à une température régulée (environ 90 °C). On mesure ensuite la masse écoulée (extrudat) à travers une filière cylindrique (diamètre 2 mm) en carbure de tungstène, au moyen d'un piston chargé. La valeur de fluidité correspond au déplacement du piston sous l'effet de la charge, en centièmes de mm pour un temps de 10 secondes (elle correspond à un débit). L'indice 100 est donné pour la fluidité de la composition témoin, un indice supérieur à 100 indique une plus grande fluidité, un indice inférieur une moins bonne fluidité.

### Energie rupture

Les indices de déchirabilité sont mesurés à 100°C. On détermine notamment la force à exercer pour obtenir la rupture (FRD, en Mpa (en N/mm)) et on mesure la déformation à rupture (DRD, en %) sur une éprouvette de dimensions 10 x 105 x 2,5 mm entaillée au centre de sa longueur par 3 entailles sur une profondeur de 5 mm, pour provoquer la rupture de l'éprouvette. Ainsi on peut déterminer l'Energie pour provoquer la rupture (Energie Rupture) de l'éprouvette qui est le produit du FRD et DRD.

### Propriétés dynamiques

Les propriétés dynamiques et notamment tan(δ)ₘₐₓ , représentative de l'hystérèse, sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente, en particulier dans les exemples cités, la température de mesure est de 60°C. On effectue un balayage en amplitude de déformation de 0,1% à 100% crête-crête (cycle aller), puis de 100% à 0,1% crête-crête (cycle retour). Les résultats exploités sont le module complexe de cisaillement dynamique (G*) et le facteur de perte tan(δ). Pour le cycle retour, on indique la valeur maximale de tan(δ) observée, noté tan(δ)ₘₐₓ,.

### II. DESCRIPTION DETAILLEE DE L'INVENTION

L'invention concerne une composition de caoutchouc à base d'au moins un coupage de caoutchouc naturel et de polyisoprène de synthèse, le taux de caoutchouc naturel allant de 60 à 90 pce, parties pour cent parties d'élastomère, et le taux de polyisoprène de synthèse allant de 10 à 40 pce, d'une charge renforçante comprenant au moins du noir de carbone et une charge inorganique, le taux de noir de carbone étant la charge renforçante majoritaire en pourcentage massique

On notera que dans la notion de pce :« parties en poids pour cent parties d'élastomère », est pris en considération l'ensemble de tous les élastomères présents dans la composition finale.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II-1) Elastomère

De façon usuelle, on utilise indifféremment dans le texte les termes « élastomère » et « caoutchouc » qui sont interchangeables.

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Parmi ces élastomères diéniques, on distingue par ailleurs le caoutchouc naturel et les élastomères synthétiques.

La composition conforme à l'invention comprend au moins un coupage de caoutchouc naturel et de polyisoprène de synthèse.

Lorsque la composition est réalisée avec un procédé de mélangeage en phase liquide pour obtenir des mélanges maîtres à base de caoutchouc naturel et de noir de carbone, on utilise un latex de caoutchouc naturel ; le latex d'élastomère étant une forme particulière de l'élastomère qui se présente sous forme de particules d'élastomère dispersées dans l'eau.

Plus particulièrement, le caoutchouc naturel (NR) existe sous différentes formes comme le détaille le chapitre 3 « Latex concentrates : properties and composition », de K.F. Gaseley, A.D.T. Gordon et T.D. Pendle dans « Naturel Rubber Science and Technology », A.D. Roberts, Oxford University Press - 1988.

En particulier plusieurs formes de latex de caoutchouc naturel sont commercialisés : les latex de caoutchouc naturel dits « de champ » (« field latex »), les latex de caoutchouc naturel dits « concentrés » (« concentrated natural rubber latex »), les latex epoxydés (« ENR »), les latex déprotéinisés ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une nouvelle concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite: « HA » (high ammonia) et de qualité dite « LA » ; on utilisera avantageusement pour l'invention des latex de caoutchouc naturel concentrés de qualité HA.

Le latex de NR peut être préalablement modifié physiquement ou chimiquement (centrifugation, traitement enzymatique, modifiant chimique...)

Le latex peut être utilisé directement ou être préalablement dilué dans de l'eau pour faciliter sa mise en oeuvre.

Les polyisoprènes de synthèse peuvent avoir toute microstructure qui est fonction des conditions de polymérisation utilisées, notamment de la présence ou non d'un agent modifiant et/ou randomisant et des quantités d'agent modifiant et/ou randomisant employées. Ces élastomères peuvent être couplés et/ou étoilés.

Conviennent particulièrement les polyisoprènes de synthèse présentant un taux (% molaire) d'enchaînements cis-1,4 supérieur à 90%, plus préférentiellement encore supérieur à 95%.

Bien entendu on peut envisager que les compositions conformes à l'invention contiennent quelques pce d'un autre élastomère diénique ou non diénique.

Conviennent notamment à ce titre, dans le groupe des élastomères diéniques fortement insaturés, les polybutadiènes (en abrégé "BR"), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

### II-2) Charges

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N400, N660, N683, N772, N990).

A titre de noir de carbone, conviennent également les noirs de carbone partiellement ou intégralement recouverts de silice par un post traitement, ou les noirs de carbone modifiés in situ par de la silice tels que, à titre non limitatif, les charges qui commercialisées par la société Cabot Corporation sous la dénomination Ecoblack^{™} « CRX 2000 » ou « CRX4000 ».

Par "charge inorganique", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("non-black filler") par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (-OH), à sa surface, nécessitant pour être utilisée à titre de charge renforçante l'emploi d'un agent ou système de couplage destiné à assurer une liaison chimique stable entre l'élastomère isoprénique et ladite charge.

Une telle charge inorganique peut donc être utilisée avec un agent de couplage pour permettre le renforcement de la composition de caoutchouc dans laquelle elle est comprise. Elle peut également être utilisée avec un agent de recouvrement (qui n'assure pas de liaison entre la charge et la matrice élastomérique) en complément d'un agent de couplage ou non (dans ce cas la charge inorganique ne joue pas de rôle de renforcement).

L'état physique sous lequel se présente la charge inorganique est indifférent, que ce soit sous forme de poudre, de microperles, de granulés, de billes ou toute autre forme densifiée appropriée. Bien entendu on entend également par charge inorganique des mélanges de différentes charges inorganiques, en particulier de charges siliceuses et/ou alumineuses hautement dispersibles telles que décrites ci-après.

Comme charges inorganiques conviennent notamment des charges minérales du type siliceuse, en particulier de la silice (SiO₂), ou du type alumineuse, en particulier de l'alumine (Al₂O₃). La silice utilisée peut être toute silice connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Evonik, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Lorsque les compositions de l'invention sont destinées à des bandes de roulement de pneumatique à faible résistance au roulement, la charge inorganique utilisée, en particulier s'il s'agit de silice, a de préférence une surface BET comprise entre 45 et 400 m²/g, plus préférentiellement comprise entre 60 et 300 m²/g.

De manière préférentielle, conviennent particulièrement pour la présente invention les charges inorganiques dont la taille moyenne (en masse) est comprise entre 20 et 300nm, plus préférentiellement entre 20 et 150 nm. Cette taille moyenne est mesurée de manière classique après dispersion, par désagglomération aux ultrasons, de la charge à analyse dans l'eau ou une solution aqueuse contenant un agent tensioactif. Pour une charge inorganique telle que silice, la mesure est réalisée au moyen d'un sédimentomètre centrifuge à détection rayons X type "XDC" ("X-rays Disk Centrifuge"), commercialisé par la société Brookhaven Instruments, selon le mode opératoire qui suit. On réalise une suspension de 3,2 g d'échantillon de charge inorganique à analyser dans 40 ml d'eau, par action durant 8 minutes, à 60% de puissance (60% de la position maxi du "output control"), d'une sonde ultrasons de 1500 W (sonificateur Vibracell 3/4 pouce commercialisé par la société Bioblock); après sonification, on introduit 15 ml de la suspension dans le disque en rotation à une vitesse variant entre 3000 et 6000 tours par minute (la vitesse étant adaptée en fonction de la taille moyenne de la charge : plus la taille est petite, plus la vitesse est élevée); après sédimentation pendant 120 minutes, la distribution en masse des tailles de particules et la taille moyenne en masse des particules dw sont calculées par le logiciel du sédimentomètre "XDC" (dw = Σ(ni di5) / Σ(ni di4) avec ni nombre d'objets de la classe de taille ou diamètre di).

Le taux de charge totale (noir de carbone et charge inorganique telle que silice) est compris entre 30 et 100 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

La charge totale de la composition comprend du noir de carbone dont le taux varie de 15 à 50 pce et une charge inorganique, en particulier de la silice, dont le taux varie de 10 à 35 pce.

### II-3) Composition de caoutchouc

Avantageusement les mélanges maîtres et les compositions ainsi réalisés sont susceptibles d'être utilisés dans les applications pour pneumatique.

Les compositions de caoutchouc pour pneumatique à base des mélanges maîtres et de charge inorganique, peuvent comporter également de façon connue un agent de couplage et/ou un agent de recouvrement et un système de vulcanisation.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z - A - Sₓ - A - Z ,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 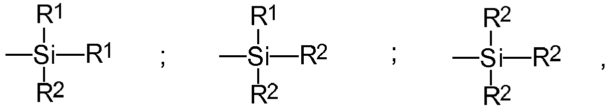 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'agent de recouvrement, on considérera généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxy-polydiméthylsiloxanes), des acides gras comme par exemple l'acide stéarique.

Dans les compositions de caoutchouc conformes à l'invention, la teneur en agent de couplage est préférentiellement comprise entre 0,1 et 12 % massique de la charge inorganique pour une surface de CTAB de 160m²/g plus préférentiellement entre 4 et 10 % massique de la charge inorganique pour une surface de CTAB de 160m²/g ; et/ou la teneur en agent de recouvrement est préférentiellement comprise 0,1 et 20 % massique de la charge inorganique pour une surface de CTAB de 160m²/g plus préférentiellement entre 5 et 20 % massique de la charge inorganique pour une surface de CTAB de 160m²/g. La teneur en agent de couplage pouvant être ajustée au niveau de surface spécifique de la charge.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Ces compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

On notera que l'on peut également envisager de réaliser les mélanges maîtres conformes à l'invention en y incorporant, notamment avant la phase de séchage, des additifs tels que décrits précédemment, huile, anti-oxydant, agent de couplage, agent de recouvrement...

### II-4). Fabrication compositions de caoutchouc

Selon un mode de réalisation de l'invention, les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon une variante de réalisation de l'invention, tous les constituants de base des compositions de l'invention, à l'exception du système de vulcanisation, sont incorporés de manière intime, par malaxage, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

Selon un autre mode de réalisation de l'invention le deuxième élastomère (le polyisoprène de synthèse) et la charge inorganique sont incorporés au premier élastomère diénique (le caoutchouc naturel) et au noir de carbone qui ont été préalablement préparés sous forme d'un premier mélange maître.

Selon une variante de réalisation de l'invention, ce premier mélange maître est réalisé en phase « liquide ». Pour ce faire, on a fait appel à l'élastomère diénique sous forme de latex qui se présente sous forme de particules d'élastomère dispersées dans l'eau, et à une dispersion aqueuse du noir de carbone car, c'est-à-dire une charge dispersée dans de l'eau, couramment appelée « slurry ». Plus préférentiellement encore on suivra les étapes de procédé décrites dans le document US 6 048 923, qui consiste notamment à incorporer un flux continu d'un premier fluide constitué par le latex d'élastomère dans la zone de mélangeage d'un réacteur de coagulation, à incorporer un deuxième flux continu d'un deuxième fluide constitué par la dispersion aqueuse de noir de carbone sous pression dans la zone de mélangeage pour former un mélange avec le latex d'élastomère ; le mélangeage de ces deux fluides étant suffisamment énergétique pour permettre de coaguler quasiment complètement le latex d'élastomère avec le noir de carbone avant l'orifice de sortie du réacteur de coagulation puis à sécher le coagulum obtenu.

Selon une autre variante de réalisation de l'invention, le premier mélange maître est obtenu par malaxage dans un mélangeur du caoutchouc naturel et du noir de carbone sous forme solide.

La charge inorganique et le deuxième élastomère peuvent être incorporés au premier mélange maître en se présentant également sous forme d'un deuxième mélange maître qui aura été préalablement préparé. Ce deuxième mélange maître peut être préparé en particulier sous forme solide par malaxage thermomécanique du deuxième élastomère et de la charge inorganique ; il peut également être préparé par tout autre procédé et notamment il peut être également préparé en phase liquide.

On notera en particulier que l'incorporation du deuxième élastomère seul et la charge inorganique seule ou sous la forme d'un deuxième mélange maître contenant le deuxième élastomère et la charge inorganique, peut être réalisée simultanément à l'introduction dans le mélangeur des autres constituants (notamment le premier élastomère diénique ou premier mélange maître) mais également avantageusement que cette ou ces incorporations peut être décalées dans le temps de quelques dizaines de secondes à quelques minutes. Dans le cas de l'introduction du deuxième élastomère seul et de la charge inorganique seule, décalée dans le temps de quelques dizaines de secondes à quelques minutes, la charge inorganique peut être introduite avant, après ou simultanément au deuxième élastomère.

Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule de tourisme, poids-lourds etc.

On notera qu'une telle composition peut constituer avantageusement la totalité de la bande de roulement conforme à l'invention.

Mais l'invention s'applique également aux cas où ces compositions de caoutchouc conformes à l'invention forment une partie seulement d'une bande de roulement composite constituée par exemple de deux couches radialement superposées de formulations différentes (structure dite "cap-base"), toutes deux destinées à entrer en contact avec la route lors du roulage du pneumatique, au cours de la vie de ce dernier.

La partie à base de compositions conformes à l'invention, pourra alors constituer la couche radialement externe de la bande de roulement destinée à entrer en contact avec le sol dès le début du roulage du pneumatique neuf, ou au contraire sa couche radialement interne destinée à entrer en contact avec le sol ultérieurement.

### III EXEMPLES DE REALISATION DE L'INVENTION

### III- 1 Préparation des compositions de caoutchouc

On procède pour l'essai qui suit de la manière suivante: on introduit dans un mélangeur interne, rempli à 70% et dont la température initiale de cuve est d'environ 50°C, le caoutchouc naturel, le noir de carbone puis, après une à deux minutes de malaxage, les divers autres ingrédients (dont le deuxième élastomère diénique et la silice) à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### III- 2 Essai

Cet exemple a pour but de mettre en évidence les propriétés d'une composition de caoutchouc conforme à l'invention à base d'un coupage de noir de carbone et de silice, et de caoutchouc naturel et de polyisoprène de synthèse, améliorées vis-à-vis de compositions témoins à base du même coupage de charge renforçante mais d'une matrice élastomérique distincte.

Les quatre compositions de l'exemple, C1 à C4, ont été préparées conformément au procédé détaillé dans le paragraphe III-1.

L'ensemble des compositions présente la formulation de base suivante (en pce) :

| | |
|---|---|
| - caoutchouc naturel | 80 |
| - deuxième élastomère | 20 |
| - noir de carbone (a) | 40 |
| - silice (b) | 15 |
| - 6PPD (c) | 2 |
| - silane (e) | 1,5 |
| - Acide stéarique | 2 |
| - Oxyde de zinc (f) | 2.7 |
| - accélérateur (g) | 0,75 |
| -soufre | 1,6 |

(a) N234 commercialisé par la société Cabot Corporation
(b) « Ultrasil 7000 » commercialisée par la société Evonik
(c) N-1,3-diméthylbutyl-N-phényl-para-phénylènediamine ("Santoflex 6-PPD" de la société Flexsys) ;
(d) huile MES ("Catenex SNR" de Shell)
(e) TESPT ("SI69" de la société Evonik)
(f) oxyde de zinc (grade industriel - société Umicore
(g) N-cyclohexyl-2-benzothiazyl-sulfénamide ("Santocure CBS" de la société Flexsys).

Les compositions C1, C2, C3 et C4 se distinguent les unes des autres par la nature du deuxième élastomère comme détaillé dans le tableau récapitulatif 1 qui suit.

**Tableau 1**

| Composition | C1 | C2 | C3 | C4 |
|---|---|---|---|---|
| Caoutchouc naturel | 20 | - | - | |
| SBR (1) | | 20 | | |
| BR (2) | - | - | 20 | |
| IR (3) | - | - | - | 20 |

| | | | | |
|---|---|---|---|---|
| (1) SBR solution fonctionnalisé Etain, non étendu, avec 24% de motifs polybutadiène 1,2, 26,5% de styrène, Tg=-48°C (2) BR (Nd) avec 0,7% de 1-2 ; 1,7% de trans 1-4 ; 98% de cis 1-4 (Tg = - 105°C) (3) IR avec 0,5% de cis 3-4 ; 0.9% de trans 1-4 ; 98.6% de cis 1-4 (Tg = - 65°C) commercialisé sous le nom « IR6596 » par la société Nizhnekamsk | | | | |

Les propriétés mesurées avant et après cuisson à 150°C pendant 40 minutes sont données dans le tableau 2 qui suit (on a choisi un indice de fluidité de 100 pour la composition témoin C1).

**Tableau 2**

| Composition | C1 | C2 | C3 | C4 |
|---|---|---|---|---|
| Propriétés avant cuisson | | | | |
| Fluidité | 100 | 89 | 79 | 145 |
| Propriétés après cuisson | | | | |
| Energie à la rupture | 28785 | 17015 | 17288 | 33354 |
| MA100 (MPa) | 1,5 | 1,5 | 1,6 | 1,6 |
| Tan(δ)max | 0,143 | 0,143 | 0,147 | 0,144 |

La comparaison entre ces quatre compositions montrent qu'elles présentent toutes les trois des propriétés de renforcement (MA100) et d'hystérèse (Tan(δ)max) très comparables.

Par contre on constate de façon surprenante que la composition C4 conforme à l'invention présente une fluidité très supérieure aux trois autres compositions d'une part. Et, d'autre part, alors que la présence de SBR (composition C2) ou de BR (composition C3) entraîne une forte baisse de l'énergie à la rupture par rapport à une composition comprenant 100% de caoutchouc naturel (composition C1), on voit de façon très étonnante que la composition C4 conforme à l'invention comportant du polyisoprène de synthèse, non seulement ne présente pas de baisse de la valeur de l'énergie rupture mais que cette propriété est même améliorée par rapport à la composition C1.

Ainsi on constate que la composition conforme à l'invention chargée en noir de carbone et en silice et comportant un coupage NR/IR (majoritaire en NR) présente un compromis de propriétés très améliorée par rapport à une composition comportant un coupage de NR avec un autre élastomère synthétique malgré une Tg de mélange intermédiaire entre les compositions C2 et C3.

## Revendications

1. Pneumatique dont la bande de roulement comporte au moins une composition de caoutchouc à base d'au moins un coupage de caoutchouc naturel et de polyisoprène de synthèse, le taux de caoutchouc naturel allant de 60 à 90 pce, parties pour cent parties d'élastomère, et le taux de polyisoprène de synthèse allant de 10 à 40 pce, d'une charge renforçante comprenant au moins du noir de carbone et une charge inorganique, le taux de noir de carbone étant la charge renforçante majoritaire en pourcentage massique, et dans lequel le taux total de charge renforçante va de 30 à 100 pce, le taux de noir de carbone est compris entre 15 et 50 pce, et le taux de charge inorganique est compris entre 10 et 35 pce.

2. Pneumatique selon la revendication 1, dans lequel le taux de caoutchouc naturel est supérieur ou égal à 70 pce et le taux de polyisoprène de synthèse inférieur ou égal à 30 pce.

3. Pneumatique selon la revendication 2, dans lequel le taux de caoutchouc naturel est supérieur ou égal à 80 pce et le taux de polyisoprène de synthèse inférieur ou égal à 20 pce.

4. Pneumatique selon l'une quelconque des revendications 1 à 3, dans lequel la charge inorganique est une silice ou un noir de carbone recouvert de silice.

5. Pneumatique selon la revendication 4, dans lequel la charge inorganique est une silice de précipitation.

6. Procédé pour obtenir une composition de caoutchouc pour une bande de roulement de pneumatique à base d'au moins un coupage de caoutchouc naturel et de polyisoprène de synthèse, le taux de caoutchouc naturel allant de 60 à 90 pce, parties pour cent parties d'élastomère, et le taux de polyisoprène de synthèse allant de 10 à 40 pce, d'une charge renforçante comprenant au moins du noir de carbone et une charge inorganique, le taux de noir de carbone étant la charge renforçante majoritaire en pourcentage massique et dans lequel le taux total de charge renforçante va de 30 à 100 pce, le taux de noir de carbone est compris entre 15 et 50 pce, et le taux de charge inorganique est compris entre 10 et 35 pce, qui comprend les étapes suivantes :
- préparer un premier mélange maître comprenant au moins le caoutchouc naturel et le noir de carbone,
- incorporer le polyisoprène de synthèse et les autres constituants de la composition, à l'exception du système de réticulation, au premier mélange maître dans un mélangeur en malaxant thermomécaniquement le tout jusqu'à atteindre une température maximale comprise entre 130°C et 200°C,
- refroidir l'ensemble à une température inférieure à 100°C,
- incorporer ensuite : le système de réticulation;
- malaxer le tout jusqu'à une température maximale inférieure à 120°C.

7. Procédé selon la revendication 6, dans lequel le premier mélange maître est obtenu par malaxage dans un mélangeur du caoutchouc naturel et du noir de carbone sous forme solide.

8. Procédé selon la revendication 6, dans lequel le premier mélange maître est obtenu par mélangeage en phase liquide à partir d'un latex de caoutchouc naturel et d'une dispersion aqueuse de noir de carbone.

## Patentansprüche

1. Reifen, dessen Lauffläche mindestens eine Kautschukzusammensetzung auf der Basis mindestens eines Blends von Naturkautschuk und synthetischem Polyisopren, wobei der Gehalt an Naturkautschuk 60 bis 90 phr, Teile auf 100 Teile Elastomer, beträgt und der Gehalt an synthetischem Polyisopren 10 bis 40 phr beträgt, eines verstärkenden Füllstoffs umfasst, der zumindest einen Ruß und einen anorganischen Füllstoff umfasst, wobei der Rußgehalt der in Gewichtsprozent überwiegende verstärkende Füllstoff ist und wobei der Gesamtgehalt des verstärkenden Füllstoffs 30 bis 100 phr beträgt, der Rußgehalt zwischen 15 und 50 phr beträgt und der Gehalt an anorganischem Füllstoff zwischen 10 und 35 phr beträgt.

2. Reifen nach Anspruch 1, wobei der Gehalt an Naturkautschuk mehr als oder gleich 70 phr und der Gehalt an synthetischem Polyisopren weniger als oder gleich 30 phr beträgt.

3. Reifen nach Anspruch 2, wobei der Gehalt an Naturkautschuk mehr als oder gleich 80 phr und der Gehalt an synthetischem Polyisopren weniger als oder gleich 20 phr beträgt.

4. Reifen nach einem der Ansprüche 1 bis 3, wobei es sich beim anorganischen Füllstoff um ein Siliciumdioxid oder einen mit Siliciumdioxid beschichteten Ruß handelt.

5. Reifen nach Anspruch 4, wobei es sich beim anorganischen Füllstoff um ein ausgefälltes Siliciumdioxid handelt.

6. Verfahren zum Erhalt einer Kautschukzusammensetzung für eine Reifenlauffläche auf der Basis mindestens eines Blends von Naturkautschuk und synthetischem Polyisopren, wobei der Gehalt an Naturkautschuk 60 bis 90 phr, Teile auf 100 Teile Elastomer, beträgt und der Gehalt an synthetischem Polyisopren 10 bis 40 phr beträgt, eines verstärkenden Füllstoffs, der zumindest Ruß und einen anorganischen Füllstoff umfasst, wobei der Rußgehalt der in Gewichtsprozent überwiegende verstärkende Füllstoff ist und wobei der Gesamtgehalt des verstärkenden Füllstoffs 30 bis 100 phr beträgt, der Rußgehalt zwischen 15 und 50 phr beträgt und der Gehalt an anorganischem Füllstoff zwischen 10 und 35 phr beträgt, das die folgenden Schritte umfasst:
- das Herstellen eines ersten Masterbatches, der zumindest den Naturkautschuk und den Ruß umfasst,
- das Einarbeiten des synthetischen Polyisoprens und der anderen Bestandteile der Zusammensetzung mit Ausnahme des Vernetzungssystems in den ersten Masterbatch in einem Mischer, indem das Ganze thermomechanisch gemischt wird, bis eine Höchsttemperatur zwischen 130 °C und 200 °C erreicht wird,
- das Abkühlen des Ganzen auf eine Temperatur von weniger als 100 °C,
- anschließend das Einarbeiten: des Vernetzungssystems;
- das Mischen des Ganzen bis zu einer Höchsttemperatur von weniger als 120 °C.

7. Verfahren nach Anspruch 6, wobei der erste Mastermix durch das Mischen des Naturkautschuks und des Rußes in fester Form in einem Mischer erhalten wird.

8. Verfahren nach Anspruch 6, wobei der erste Mastermix durch Mischen in der flüssigen Phase aus einem Latex von Naturkautschuk und einer wässrigen Rußdispersion erhalten wird.

## Claims

1. Tire whose tread comprises at least one rubber composition based on at least a blend of natural rubber and synthetic polyisoprene, the content of natural rubber ranging from 60 to 90 phr of, parts per hundred parts of elastomer, and the content of synthetic polyisoprene ranging from 10 to 40 phr to, a reinforcing filler comprising at least carbon black and an inorganic filler, the content of carbon black being the majority reinforcing filler in mass percentage, and in which the total content of reinforcing filler ranges from 30 to 100 phr, the content of carbon black is between 15 and 50 phr and the content of inorganic filler is between 10 to 35 phr.

2. Tire according to claim 1, wherein the content of natural rubber is greater than or equal to 70 phr and the amount of synthetic polyisoprene is less than or equal to 30 phr.

3. A tire according to claim 2, in which the natural rubber content is greater than or equal to 80 phr and the synthetic polyisoprene content is less than or equal to 20 phr.

4. A tire according to any one of claims 1 to 3, in which the inorganic filler is a silica or a carbon black covered with silica.

5. A tire according to claim 4, in which the inorganic filler is a precipitated silica.

6. Process for obtaining a rubber composition for a tire tread based on at least one blend of natural rubber and synthetic polyisoprene, the content of natural rubber ranging from 60 to 90 phr, parts per hundred parts of elastomer, and the content of synthetic polyisoprene ranging from 10 to 40 phr, of a reinforcing filler comprising at least carbon black and an inorganic filler, the content of carbon black being the main reinforcing filler in mass percentage and in which the total level of reinforcing filler ranges from 30 to 100 phr, the level of carbon black is between 15 and 50 phr, and the level of inorganic filler is between 10 and 35 phr, which comprises the following steps:
- preparing a first masterbatch comprising at least the natural rubber and the carbon black,
- incorporate the synthetic polyisoprene and the other constituents of the composition, with the exception of the crosslinking system, into the first masterbatch in a mixer by mixing everything thermomechanically until a maximum temperature of between 130°C and 200° is reached,
- cooling the all to a temperature below 100°C,
- then incorporate: the crosslinking system;
- mix everything together until a maximum temperature of less than 120°C.

7. Process according to claim 6, in which the first masterbatch is obtained by kneading natural rubber and carbon black in solid form in a mixer.

8. Process according to claim 6, in which the first masterbatch is obtained by mixing in the liquid phase from a natural rubber latex and an aqueous dispersion of carbon black.
